# EUROPÄISCHE PATENTSCHRIFT

(11) **EP 2 509 276 B1**
(45) Veröffentlichungstag und Bekanntmachung des Hinweises auf die Patenterteilung: **20.11.2013**
(21) Anmeldenummer: 11161175.2
(22) Anmeldetag: 05.04.2011
(51) Int. Cl.: H04L 29/06, G06F 21/00, H04W 12/02, H04W 72/04, H04W 76/02

(54) **Verfahren zum sicheren Übertragen von elektronischen Daten über eine Datenkommunikationsverbindung zwischen einem Gerät und einem weiteren Gerät**
Method for secure transmission of electronic data over a data communication connection between one device and another
Procédé de transmission sécurisée de données électroniques à travers une connexion de communication de données entre un appareil et un autre appareil

(43) Veröffentlichungstag der Anmeldung: 10.10.2012
(73) Patentinhaber: F. Hoffmann-La Roche AG, 4070 Basel (CH); Roche Diagnostics GmbH, 68305 Mannheim (DE)
(72) Erfinder: Porsch, Ulrich, 69469 Weinheim (DE); Schwenker, Kai-Oliver, 67454 Haßloch (DE); Birtwhistle, Dan, Fishers, 46037 Indiana (US); Strickland, Raymond, Indianapolis, 46219 Indiana (US); Moser, Max, 8408 Winterthur (CH); Schroeder, Thorsten, 12559 Berlin (DE)
(74) Vertreter: Bittner, Thomas L.

(56) Entgegenhaltungen:
- EP-A2- 1 513 288
- WO-A1-02/056536
- WO-A1-2006/097783

## Beschreibung

Die Erfindung betrifft ein Verfahren zum sicheren Übertragen von elektronischen Daten über eine Datenkommunikationsverbindung zwischen einem Gerät und einem weiteren Gerät, wobei wenigstens eines der Geräte ein medizinisches Gerät ist.

### Hintergrund der Erfindung

In Verbindung mit medizinischen Geräten beliebiger Art besteht häufig die Aufgabe, sensible elektronische Daten zwischen den medizinischen Geräten selbst oder zwischen einem medizinischen Gerät und einem nicht medizinischen Gerät mit ausreichender Sicherheit zu übertragen. Bei dem nicht medizinischen Gerät kann es sich beispielsweise um eine Auswertevorrichtung handeln. Hierzu ist zum Beispiel ein Computersystem nutzbar, mit dem auf das Gerät übertragene Daten ausgewertet werden können, beispielsweise für eine anschließende Ausgabe über eine Anzeigeeinrichtung oder einen Drucker. Nutzbar hierfür ist zum Beispiel ein sogenannter Personalcomputer.

Für das sichere Übertragen zwischen solchen Geräten werden beispielsweise kryptografische Verfahren eingesetzt. Sie dienen der Verschlüsselung der zu übertragenden elektronischen Daten. Die für die Verschlüsselung und die Entschlüsselung genutzten Algorithmen müssen nicht identisch sein. Das Verschlüsselungsverfahren wird als symmetrisches Verfahren bezeichnet, wenn stets identische geheime Schlüssel zur Verschlüsselung und zur Entschlüsselung benutzt werden. Kryptografische Methoden mit unterschiedlichen Schlüsseln zur Ver- und Entschlüsselung werden als asymmetrische Verfahren bezeichnet. Hierzu gehört beispielsweise das Verfahren, bei dem der Sender der elektronischen Daten einen öffentlichen Schlüssel des Empfängers zur Verschlüsselung und der Empfänger seinen geheimgehaltenen, öffentlich nicht bekannten, sogenannten privaten Schlüssel zur Entschlüsselung nutzt.

Das Dokument WO 02/056536 Al offenbart ein Verfahren zum Verbinden eines ersten Bluetooth-Gerätes und eines zweiten Bluetooth-Gerätes. Das erste Gerät erzeugt ein zufälliges Passwort und überträgt das Passwort an das zweite Gerät. Das Passwort wird vom zweiten Gerät geprüft und bei erfolgreicher Prüfung wird eine Verbindung mit dem ersten Gerät hergestellt. Zum Erzeugen des Passworts können eine Benutzereingabe oder elektronische Signale eines weiteren Geräts verwendet werden.

### Zusammenfassung der Erfindung

Aufgabe der Erfindung ist es, ein verbessertes Verfahren zum sicheren Übertragen von elektronischen Daten über eine Datenkommunikationsverbindung zwischen einem Gerät und einem weiteren Gerät anzugeben, wobei wenigstens eines der Geräte ein medizinisches Gerät ist. Insbesondere soll der Umgang mit den beim Aufbau und bei der Nutzung der Datenübertragung verwendeten Schlüssel(n) optimiert werden.

Diese Aufgabe wird erfindungsgemäß durch ein Verfahren zum sicheren Übertragen von elektronischen Daten über eine Datenkommunikationsverbindung zwischen einem Gerät und einem weiteren Gerät nach dem unabhängigen Anspruch 1 gelöst. Vorteilhafte Ausgestaltungen der Erfindung sind Gegenstand von abhängigen Unteransprüchen.

Die Erfindung umfasst den Gedanken eines Verfahrens zum sicheren Übertragen von elektronischen Daten über eine Datenkommunikationsverbindung, die zwischen einem Gerät und einem weiteren Gerät mit unabhängigen Übertragungskanälen gebildet ist, wobei wenigstens eines der Geräte ein medizinisches Gerät ist und wobei das Verfahren die folgenden Schritte aufweist:
- Bereitstellen eines Passwortes in dem Gerät,
- Empfangen des Passwortes in dem weiteren Gerät getrennt von der Datenkommunikationsverbindung,
- Auswählen eines der unabhängigen Übertragungskanäle mittels einer Kanalauswahlfunktion in dem weiteren Gerät, wobei dem ausgewählten Übertragungskanal eine Kanalkennung zugeordnet ist,
- Verschlüsseln der Kanalkennung des ausgewählten unabhängigen Übertragungskanals unter Verwendung des empfangenen Passwortes in dem weiteren Gerät,
- Übertragen der verschlüsselten Kanalkennung von dem weiteren Gerät an das Gerät über die Datenkommunikationsverbindung und Entschlüsseln der verschlüsselten Kanalkennung in dem Gerät,
- Bereitstellen eines Sitzungsschlüssels in dem Gerät und dem weiteren Gerät und
- Übertragen von verschlüsselten elektronischen Daten zwischen dem Gerät und dem weiteren Gerät über den ausgewählten unabhängigen Übertragungskanal unter Verwendung des Sitzungsschlüssels zum Verschlüsseln und die Entschlüsseln der elektronischen Daten.

Das vorgeschlagene Verfahren umfasst also zunächst die Bereitstellung eines Passwortes in einem der kommunizierenden Geräte, vorzugsweise in dem medizinischen Gerät. Das Passwort in dem hier verwendeten Sinne hat eine Ausprägung, derart, dass es für kryptografische Prozesse nutzbar ist, also die Verschlüsselung und Entschlüsselung elektronischer Daten. Das bereitgestellte Passwort wird dann von dem weiteren Gerät empfangen. Die Übermittlung des Passwortes an das weitere Gerät erfolgt getrennt und losgelöst von der Datenkommunikationsverbindung, was beispielsweise dadurch ausgeführt wird, dass an dem weiteren Gerät, bei dem es sich ebenfalls um ein medizinisches oder alternativ ein nicht medizinisches Gerät handelt, eine Benutzereingabe erfasst wird, zum Beispiel dadurch, dass eine Eingabe des Benutzers über eine Tastatur erfasst wird. Auch kann vorgesehen sein, eine von der Datenkommunikationsverbindung verschiedene, getrennt gebildete Kommunikationsverbindung zwischen den Geräten für die Passwortübermittlung zu nutzen. Diese Kommunikationsverbindung kann zum Beispiel nur zeitweise für die Übermittlung des Passwortes aufgebaut werden.

Sodann wird in dem weiteren Gerät einer der unabhängigen Übertragungskanäle, die im Rahmen der Datenkommunikationsverbindung für das Übertragen elektronischer Daten zwischen dem Gerät und dem weiteren Gerät zur Verfügung stehen, mittels einer Kanalauswahlfunktion ausgewählt, was vorzugsweise mittels einer Gerätefunktion erfolgt, die einen Zufallsalgorithmus nutzt. Dem ausgewählten unabhängigen Übertragungskanal ist eine Kanalkennung zugeordnet, beispielsweise eine Kanalnummer und / oder ein Kanalbuchstabe, welche dann in dem weiteren Gerät unter Verwendung des Passwortes kryptografisch verschlüsselt wird. Es wird hierbei verschlüsselte Kanalkennungsinformation erzeugt. Diese wird dann von dem weiteren Gerät an das Gerät über die Datenkommunikationsverbindung übertragen und in dem Gerät entschlüsselt, wobei hierbei das zuvor bereitgestellt Passwort zum Einsatz kommt. Hierauf kann vorgesehen sein, dass das Gerät nun für eine Datenkommunikation über den anhand der Kanalkennung identifizierten unabhängigen Übertragungskanal eingerichtet wird, beispielsweise dadurch, dass für den anhand der Kanalkennung identifizierten Übertragungskanal ein Empfangsmodus (Betriebsart "Hören") gestartet wird.

In dem Gerät als auch in dem weiteren Gerät werden sodann ein oder mehrere Sitzungsschlüssel (Session-Schlüssel) bereitgestellt, die für das anschließende Verschlüsseln und Entschlüsseln von zu übertragenden elektronischen Daten genutzt werden, so dass über die Datenkommunikationsverbindung, also über den anhand der Kanalkennung identifizierten Übertragungskanal, elektronische Daten zwischen dem Gerät und dem weiteren Gerät übertragen werden. Die Bereitstellung des einen oder der mehreren Sitzungsschlüssel in den an der Kommunikation beteiligten Geräten kann auf verschiedene Art und Weise erfolgen, was unten noch näher erläutert wird. Schlüsselerzeugungsmechanismen und - verfahren sind als solche im Übrigen in verschiedener Art und Weise bekannt.

Mithilfe des vorgeschlagenen Verfahrens wird die Sicherheit beim Aufbau und der Nutzung eines oder mehrerer Übertragungskanäle zwischen den beteiligten Geräten verbessert. Zunächst erfolgt die Übertragung der Information betreffend einen (zufällig) ausgewählten Übertragungskanal unter Verwendung einer Verschlüsselung / Entschlüsselung mittels des Passwortes. Ein besonders hoher Grad an Sicherheit ist gegeben, wenn in einer Ausführungsform das Passwort in dem Gerät erzeugt und über eine Ausgabeeinrichtung, zum Beispiel ein Display, einem Nutzer bekannt gemacht wird, worauf der Benutzer seinerseits das Passwort über eine Eingabeeinrichtung in dem weiteren Gerät eingeben kann. Insbesondere bei dieser möglichen Ausgestaltung des Verfahrens erfolgt die Bereitstellung des Passwortes, welches zur Übertragung der Information betreffend die Kanalkennung genutzt wird, unabhängig und losgelöst von der Datenkommunikationsverbindung zwischen dem Gerät und dem weiteren Gerät, die schließlich für die Übertragung der zu übertragenden elektronischen Daten genutzt wird. Hierbei erfasst das weitere Gerät eine Benutzereingabe des Passwortes, so dass dieses dann in dem weiteren Gerät bereitgestellt ist.

Es kann alternativ oder ergänzend auch vorgesehen sein, in einer anderen Ausgestaltung das Passwort von dem Gerät an das weitere Gerät über eine Kommunikationsverbindung zu übertragen, die getrennt von der Datenkommunikationsverbindung mit den mehreren unabhängigen Übertragungskanälen gebildet ist. Auch in diesem Fall erfolgt die Übermittlung der Information bezüglich des Passwortes zwischen dem Gerät und dem weiteren Gerät unabhängig und getrennt von der schließlich zur Übertragung der verschlüsselten elektronischen Daten genutzten Datenkommunikationsverbindung.

Eine bevorzugte Weiterbildung der Erfindung sieht vor, dass beim Übertragen der verschlüsselten Kanalkennung von dem weiteren Gerät an das Gerät ein anderer unabhängiger Übertragungskanal die Datenkommunikationsverbindung verwendet wird, welcher von dem ausgewählten unabhängigen Übertragungskanal verschieden ist. Die verschlüsselte Information betreffend die Kanalkennung des in dem weiteren Gerät ausgewählten, unabhängigen Übertragungskanals erfolgt also über einen anderen unabhängigen Übertragungskanal der Datenkommunikationsverbindung, welcher von dem ausgewählten unabhängigen Übertragungskanal verschieden ist, der später dann zur verschlüsselten Übertragung der Daten zumindest anfänglich genutzt wird. Auch hier kann vorgesehen sein, den anderen unabhängigen Übertragungskanal nach dem Zufallsprinzip auszuwählen, wobei eine Auswahl ignoriert würde, wenn hierbei der zuvor ausgewählte unabhängige Übertragungskanal bestimmt würde. In diesem Fall kann festgelegt sein, die Auswahl des anderen unabhängigen Übertragungskanals, der hier zum Übermitteln der verschlüsselten Kanalkennung genutzt werden soll, zu wiederholen oder einfach einen hiervon abweichenden Übertragungskanal festzulegen.

Bei einer zweckmäßigen Ausgestaltung der Erfindung kann vorgesehen sein, dass beim Bereitstellen des Sitzungsschlüssels zunächst ein Erzeugungsschlüssel bereitgestellt und der Sitzungsschlüssel mittels einer Erzeugungsfunktion unter Verwendung des Erzeugungsschlüssels erzeugt wird. Ein derartiger Erzeugungsschlüssel wird auch als Derivation-Schlüssel bezeichnet. Der Erzeugungsschlüssel wird von einer sogenannten Schlüssel-Ableitungsfunktion *("key derivation function")* genutzt, um ausgehend von einem Masterschlüssel oder anderer bekannter Information wie einem Passwort einen oder mehrere sichere Schlüssel zu erzeugen, nämlich den oder die Sitzungsschlüssel. Es wird hierbei eine sogenannte Pseudo-Zufallsfunktion für die Kryptografie genutzt. Es werden also ein oder mehrere Sitzungsschlüssel ausgehend von dem Erzeugungsschlüssel abgeleitet, indem die Erzeugungs- oder Ableitungsfunktion ausgeführt wird. Der Erzeugungsschlüssel selbst wird in dem weiteren Gerät oder dem Gerät nach dem Zufallsprinzip erzeugt, beispielsweise in Form eines 128-Bit Binärkodes. Er kann dann an das andere an der Kommunikation beteiligte Gerät über die Datenkommunikationsverbindung übertragen werden, vorzugsweise über den anhand der Kanalkennung identifizierten unabhängigen Übertragungskanal.

Eine vorteilhafte Ausführungsform der Erfindung sieht vor, dass beim Bereitstellen des Erzeugungsschlüssels der Erzeugungsschlüssel in dem Gerät und dem weiteren Gerät bereitgestellt wird und der Sitzungsschlüssel jeweils unabhängig in dem Gerät und dem weiteren Gerät abgeleitet wird. Bei dieser Ausführungsform wird der Erzeugungsschlüssel in beiden Geräten, also sowohl in dem Gerät als auch in dem weiteren Gerät, genutzt, um lokal den einen oder die mehreren Sitzungsschlüssel unabhängig voneinander in den beiden Geräten zu erzeugen.

Bevorzugt sieht eine Fortbildung der Erfindung vor, dass der Erzeugungsschlüssel und / oder der Sitzungsschlüssel eine größere Schlüssellänge als das Passwort aufweist. Hierdurch ist ein Verfahren implementierbar, bei dem zunächst ein Schlüssel geringerer Länge, nämlich das Passwort, erzeugt und bereitgestellt wird. Dieser Schlüssel geringerer Länge wird dann genutzt, um die Information über einen (zufällig) ausgewählten unabhängigen Übertragungskanal zwischen den Geräten zu übertragen. Anschließend wird ein Schlüssel größerer Länge, nämlich der Erzeugungsschlüssel, genutzt, um den oder die Sitzungsschlüssel für das Verschlüsseln / Entschlüsseln der zu übertragenen elektronischen Daten abzuleiten. Die Schlüssellänge ist eine wichtige Eigenschaft kryptografischer Verfahren und bezeichnet üblicherweise ein logarithmisches Maß für die Anzahl der verschiedenen möglichen Schlüssel des Verfahrens. In Verbindung mit digitalen Verschlüsselungsverfahren kann die Schlüssellänge insbesondere anhand einer Bit-Zahl unterschieden werden.

Bei einer vorteilhaften Ausgestaltung der Erfindung kann vorgesehen sein, dass das Passwort in dem Gerät bereitgestellt wird, derart, dass das Passwort in dem Gerät mittels einer Passwort-Erzeugungsfunktion erzeugt wird. Das Passwort wird in dem Gerät, welches vorzugsweise das medizinische Gerät ist, beispielsweise stets dann mit Hilfe der Passwort-Erzeugungsfunktion bereitgestellt, wenn der Benutzer des Gerätes eine Software-Applikation startet, die eine Übertragung von elektronischen Daten zwischen dem Gerät und dem weiteren Gerät vorsieht. Hierdurch wird dem Benutzer unabhängig von der Datenkommunikationsverbindung, welche später zum tatsächlichen Übertragen der verschlüsselten Daten genutzt wird, ein zur Verschlüsselung und Entschlüsselung nutzbares Passwort zur Kenntnis gegeben und in dem Gerät auch selbst bereitgestellt. Alternativ kann vorgesehen sein, dass das Passwort unabhängig von dem Gerät und dem weiteren Gerät erzeugt und bereitgestellt wird, so dass bei dem Verfahren zum Austauschen elektronischer Daten dann das Passwort sowohl in dem Gerät als auch in dem weiteren Gerät zu erfassen ist, beispielsweise mittels des automatischen Erfassen einer Benutzereingabe.

Eine Weiterbildung der Erfindung kann vorsehen, dass das Passwort über eine Ausgabeeinrichtung des Gerätes ausgegeben wird. Bei dieser Ausführungsform wird das in dem Gerät bereitgestellte Passwort über eine Ausgabeeinrichtung dem Benutzer zur Kenntnis gebracht, beispielsweise über eine Anzeige und / oder einen Drucker. Hierdurch wird der Benutzer in die Lager versetzt, das Passwort dann an dem weiteren Gerät einzusetzen.

Bei einer zweckmäßigen Ausgestaltung der Erfindung kann vorgesehen sein, dass die Datenkommunikationsverbindung als eine drahtlose Datenkommunikationsverbindung gebildet wird. Bei der drahtlosen Datenkommunikationsverbindung kann es sich beispielsweise um ein WLAN- ("Wireless Local Area Network"), eine ZigBee-Verbindung (Funk), eine NFC-Verbindung (NFC - *Near Field Communication)* oder eine Bluetooth-Verbindung handeln.

In einer Ausgestaltung des Verfahrens kann vorgesehen sein, dass nach einer Nutzungszeit die Verwendung des ausgewählten unabhängigen Übertragungskanals beendet und zwischen dem Gerät und dem weiteren Gerät ein anderer der unabhängigen Übertragungskanäle ausgewählt wird, der dann im Anschluss für die weitere verschlüsselte Übertragung der elektronischen Daten genutzt wird. Hierbei wird nach der Nutzungszeit die Nutzung des anhand der Kanalkennung identifizierten Übertragungskanals beendet und zwischen den beteiligten Geräten ein neuer Übertragungskanal aus der Menge der zur Verfügung stehenden Übertragungskanäle ausgewählt, der dann im Anschluss für die weitere verschlüsselte Übertragung der elektronischen Daten genutzt wird. Die Nutzungszeit kann anwendungsabhängig festgelegt oder zwischen den Geräten ausgehandelt werden. Zum einseitigen Übersenden oder zum zweiseitigen Austausch von elektronischen Informationen betreffend den Prozess des Kanalwechsels, zum Beispiel zum Übertragen der Information, die den neu ausgewählten Übertragungskanal identifiziert, wird vorzugsweise der momentan genutzte Übertragungskanal verwendet, dessen Nutzung dann beendet wird. Aber auch Informationen können über den bestehenden Kanal ausgetauscht werden, die der Aushandlung von Nutzungsbedingungen für den neuen Übertragungskanal dienen, zum Beispiel betreffend eine Nutzungsdauer und / oder Übertragungscharakteristika. Für die Nutzung des neuen Kanals kann die Erzeugung eines oder mehrerer weiterer Sitzungsschlüssel vorgesehen sein. Hierbei gelten die Ausführungen zu den Sitzungsschlüsseln entsprechend. Ein solches Verfahren kann auch als "channel hopping" bezeichnet werden, da zur Optimierung der Sicherheit der Datenübertragung im Rahmen der Übertragung der elektronischen Daten mehrere voneinander unabhängige Übertragungskanäle zum Einsatz kommen.

Eine vorteilhafte Ausführungsform der Erfindung sieht vor, dass der andere der unabhängigen Übertragungskanäle basierend auf den verschlüsselten elektronischen Daten ausgewählt wird, die über den ausgewählten Übertragungskanal übertragen werden.

### Beschreibung bevorzugter Ausführungsbeispiele der Erfindung

Die Erfindung wird im Folgenden anhand von bevorzugten Ausführungsbeispielen unter Bezugnahme auf eine Figur näher erläutert.

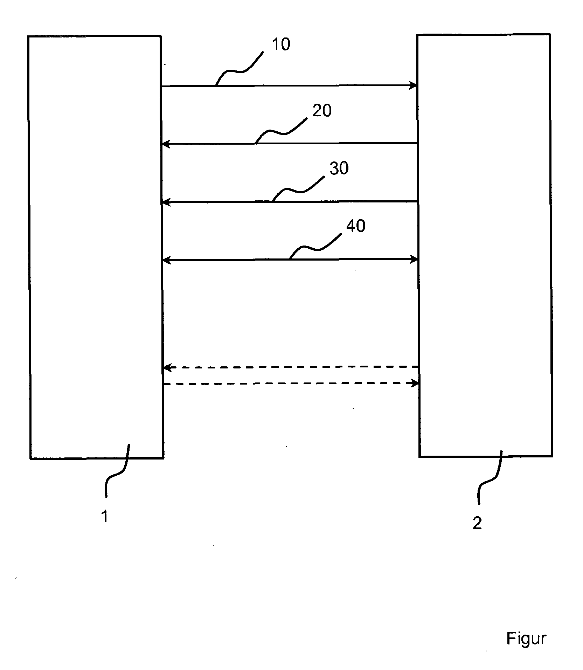

Die einzige Figur zeigt eine schematische Darstellung zum Beschreiben eines Verfahrens zum sicheren Übertragen von elektronischen Daten zwischen einem medizinischen Gerät 1 und einem weiteren Gerät 2, welches für eine Datenkommunikation mit dem medizinischen Gerät 1 hergerichtet ist und bei dem es sich um in nicht medizinisches Gerät, zum Beispiel einen Personalcomputer, oder ein weiteres medizinisches Gerät handelt.

Die Übertragung elektronischer Daten zwischen dem medizinischen Gerät 1 und dem weiteren Gerät 2 erfolgt über eine Datenkommunikationsverbindung, die ihrerseits mehrere unabhängige Übertragungskanäle umfasst und bevorzugt als drahtlose Verbindung ausgeführt ist. Eine derartige Verbindung ist beispielsweise im Rahmen eines WLANs oder mittels Bluetooth-Verbindung ausbildbar. Aber auch eine ZigBee-Verbindung (Funk) oder eine NFC-Verbindung können genutzt werden.

Die übertragenen elektronischen Daten betreffen sicherheitsrelevante medizinische Daten, zum Beispiel Ergebnisse von Blutzuckerbestimmungen, die mit dem medizinischen Gerät 1 ausgeführt wurden, wenn es sich hierbei um ein Blutzuckermessgerät handelt. Aber auch für andere medizinische Geräte beliebiger Art kann das Verfahren zur Datenübertragung genutzt werden, wenn ein hoher Grad an Sicherheit der Datenübermittlung gewünscht ist. Insbesondere die Übermittlung von patientenspezifischen medizinischen Daten ist mit Hilfe des vorgeschlagenen Verfahrens auf sichere Art und Weise ermöglicht.

Für das sichere Übertragen von elektronischen Daten zwischen dem medizinischen Gerät 1 und dem weiteren Gerät 2 wird in Ausführungsbeispielen das folgende Verfahren implementiert. Zunächst wird in einer Ausführungsform in dem medizinischen Gerät 1 ein für kryptografische Verfahren zum digitalen Verschlüsseln und Entschlüsseln nutzbares Passwort bereitgestellt. Dieses erfolgt zum Beispiel dadurch, dass beim Aufrufen einer Software-Applikation in dem medizinischen Gerät 1 eine Passwort-Erzeugungsfunktion ausgeführt wird, mit der nach dem Zufallsprinzip ein Passwort erzeugt wird. Das Passwort wird sodann über eine Ausgabeeinrichtung des medizinischen Gerätes 1, also beispielsweise ein Display oder einen Drucker, ausgegeben. Hierauf ist der Benutzer des medizinischen Gerätes 1 in der Lage, das Passwort in das weitere Gerät 2 einzugeben, was in der Figur schematisch mittels eines Schritts 10 gezeigt ist. Das weitere Gerät 2 erfasst also automatisch eine Benutzereingabe des Passwortes. Hierauf wird sodann mit Hilfe einer Auswahlfunktion in dem weiteren Gerät 2 ein unabhängiger Übertragungskanal aus der Menge der unabhängigen Übertragungskanäle der Datenkommunikationsverbindung zwischen dem medizinischen Gerät 1 und dem weiteren Gerät 2 ausgewählt. Die mehreren unabhängigen Übertragungskanäle sind unabhängig und getrennt voneinander gebildet im Rahmen der Datenkommunikationsverbindung, vorzugsweise als Bestandteil einer drahtlosen Datenkommunikationsverbindung.

Dem ausgewählten unabhängigen Kanal ist eine Kanalkennung zugeordnet, beispielsweise eine Kanalnummer und / oder ein Kanalbuchstabe. Die Kanalkennung wird nun in dem weiteren Gerät 2 unter Verwendung des erfassten Passwortes mittels Kryptografie verschlüsselt. Die verschlüsselte Kanalkennungsinformation wird dann von dem weiteren Gerät 2 an das medizinische Gerät 1 über die Datenkommunikationsverbindung übertragen, was in der Figur schematisch mittels eines Schrittes 20 gezeigt ist. In dem medizinischen Gerät 1 wird die verschlüsselte Information entschlüsselt, so dass auch in dem weiteren Gerät 2 die Information über die Kanalkennung vorliegt. Hierauf wird dann das weitere Gerät 2 für eine Datenkommunikation über den ausgewählten Übertragungskanal eingerichtet, beispielsweise dadurch, dass ein Empfangsmodus zum Empfangen von elektronischen Daten über den ausgewählten unabhängigen Übertragungskanal gestartet wird.

Im nächsten Schritt wird nun in dem weiteren Gerät 2 mithilfe einer entsprechenden Funktionalität ein sogenannter Erzeugungsschlüssel für Kryptografie erzeugt und bereitgestellt. Beispielsweise handelt es sich hierbei um einen Binärcode mit 128 Bit Länge. Aber auch Erzeugungsschlüssel anderer Schlüssellänge können vorgesehen sein. Der Erzeugungsschlüssel wird sodann über die Datenkommunikationsverbindung, vorzugsweise über den zuvor ausgewählten unabhängigen Übertragungskanal, von dem weiteren Gerät 2 zu dem medizinischen Gerät 1 übertragen (vgl. Schritt 30 in der Figur), so dass der Erzeugungsschlüssel sowohl in dem medizinischen Gerät 1 als auch im weiteren Gerät 2 zur Verfügung steht.

Unter Verwendung des Erzeugungsschlüssels wird dann in dem medizinischen Gerät 1 und dem weiteren Gerät 2 unabhängig voneinander ein Sitzungsschlüssel mithilfe einer Erzeugungs- oder Ableitungsfunktion erzeugt. Der Sitzungsschlüssel wird anschließend für eine Übertragung verschlüsselter Daten zwischen dem medizinischen Gerät 1 und dem weiteren Gerät 2 genutzt, was in der Figur schematisch mittels eines Schrittes 40 gezeigt ist. Die hierbei übertragenen elektronischen Daten werden also mithilfe des einen oder mehrerer Sitzungsschlüssel verschlüsselt und entschlüsselt.

Mithilfe des beschriebenen Verfahrens ist die Möglichkeit geschaffen, zunächst unabhängig von der Datenkommunikationsverbindung, die schließlich für die Übertragung der verschlüsselten elektronischen Daten genutzt wird, in dem medizinischen Gerät 1 und dem weiteren Gerät 2 ein Passwort bereitzustellen, welches vorzugsweise eine geringe Schlüssellänge aufweist. Nachdem ein unabhängiger Übertragungskanal ausgewählt und für die spätere Übertragung der elektronischen Daten bestimmt wurde, kann der Erzeugungsschlüssel bereitgestellt werden, welcher vorzugsweise eine größere Schlüssellänge als das Passwort aufweist. Insgesamt ist mit dem Verfahren die Sicherheit der Übertragung der elektronischen Daten unter Verwendung kryptografischer Verfahren verbessert.

## Patentansprüche

1. Verfahren zum sicheren Übertragen von elektronischen Daten über eine Datenkommunikationsverbindung, die zwischen einem Gerät (1) und einem weiteren Gerät (2) mit unabhängigen Übertragungskanälen gebildet ist, wobei das Verfahren die folgenden Schritte aufweist:
- Bereitstellen eines Passwortes in dem Gerät (1),
- Empfangen des Passwortes in dem weiteren Gerät (2) getrennt von der Datenkommunikationsverbindung,
- Auswählen eines der unabhängigen Übertragungskanäle,
- Bereitstellen eines Sitzungsschlüssels in dem Gerät (1) und dem weiteren Gerät (2) und
- Übertragen von verschlüsselten elektronischen Daten zwischen dem Gerät (1) und dem weiteren Gerät (2) über den ausgewählten unabhängigen Übertragungskanal unter Verwendung des Sitzungsschlüssels zum Verschlüsseln und Entschlüsseln der elektronischen Daten,
**dadurch gekennzeichnet, dass**
- wenigstens eines der Geräte (1, 2) ein medizinisches Gerät ist,
- der unabhängige Übertragungskanal mittels einer Kanalauswahlfunktion in dem weiteren Gerät (2) ausgewählt wird, wobei dem ausgewählten Übertragungskanal eine Kanalkennung zugeordnet ist,
- die Kanalkennung des ausgewählten unabhängigen Übertragungskanals unter Verwendung des empfangenen Passwortes in dem weiteren Gerät (2) verschlüsselt wird und
- die verschlüsselte Kanalkennung von dem weiteren Gerät (2) an das Gerät (1) über die Datenkommunikationsverbindung übertragen wird und in dem Gerät (1) entschlüsselt wird.

2. Verfahren nach Anspruch 1, **dadurch gekennzeichnet, dass** beim Übertragen der verschlüsselten Kanalkennung von dem weiteren Gerät (2) an das Gerät (1) ein anderer unabhängiger Übertragungskanal die Datenkommunikationsverbindung verwendet wird, welcher von dem ausgewählten unabhängigen Übertragungskanal verschieden ist.

3. Verfahren nach Anspruch 1 oder 2, **dadurch gekennzeichnet, dass** beim Bereitstellen des Sitzungsschlüssels zunächst ein Erzeugungsschlüssel bereitgestellt und der Sitzungsschlüssel mittels einer Erzeugungsfunktion unter Verwendung des Erzeugungsschlüssels erzeugt wird.

4. Verfahren nach Anspruch 3, **dadurch gekennzeichnet, dass** beim Bereitstellen des Erzeugungsschlüssels der Erzeugungsschlüssel in dem Gerät (1) und dem weiteren Gerät (2) bereitgestellt wird und der Sitzungsschlüssel jeweils unabhängig in dem Gerät (1) und dem weiteren Gerät (2) abgeleitet wird.

5. Verfahren nach mindestens einem der vorangehenden Ansprüche, **dadurch gekennzeichnet, dass** der Erzeugungsschlüssel eine größere Schlüssellänge als das Passwort aufweist.

6. Verfahren nach mindestens einem der vorangehenden Ansprüche, **dadurch gekennzeichnet, dass** das Passwort in dem Gerät (1) bereitgestellt wird, derart, dass das Passwort in dem Gerät (1) mittels einer Passwort-Erzeugungsfunktion erzeugt wird.

7. Verfahren nach mindestens einem der vorangehenden Ansprüche, **dadurch gekennzeichnet, dass** das Passwort über eine Ausgabeeinrichtung des Gerätes (1) ausgegeben wird.

8. Verfahren nach mindestens einem der vorangehenden Ansprüche, **dadurch gekennzeichnet, dass** die Datenkommunikationsverbindung als eine drahtlose Datenkommunikationsverbindung gebildet wird.

9. Verfahren nach mindestens einem der vorangehenden Ansprüche, **dadurch gekennzeichnet, dass** nach einer Nutzungszeit die Verwendung des ausgewählten unabhängigen Übertragungskanals beendet und zwischen dem Gerät (1) und dem weiteren Gerät (2) ein anderer der unabhängigen Übertragungskanäle ausgewählt wird, der dann im Anschluss für die weitere verschlüsselte Übertragung der elektronischen Daten genutzt wird.

10. Verfahren nach Anspruch 9, **dadurch gekennzeichnet, dass** der andere der unabhängigen Übertragungskanäle basierend auf den verschlüsselten elektronischen Daten ausgewählt wird, die über den ausgewählten unabhängigen Übertragungskanal übertragen werden.

## Claims

1. A method for the secure transmission of electronic data via a data communication link, which is formed between a device (1) and an additional device (2) with independent transmission channels, wherein the method comprises the following steps:
- providing a password in the device (1),
- receiving the password in the additional device (2) separate from the data communication link,
- selecting one of the independent transmission channels,
- providing a session key in the device (1) and the additional device (2) and
- transmitting encrypted electronic data between the device (1) and the additional device (2) via the independent transmission channel selected using the session key for the encryption and decryption of the electronic data,
**characterized in that**
- at least one of the devices (1, 2) is a medical device,
- the independent transmission channel is selected by means of a channel selection function in the additional device (2), wherein a channel identification is assigned to the selected transmission channel,
- the channel identification of the selected independent transmission channel is encrypted using the received password in the additional device (2),
- the encrypted channel identification is transmitted from the additional device (2) to the device (1) via the data communication link and the encrypted channel identification is decrypted in the device (1).

2. The method according to claim 1, **characterized in that** during transmission of the encrypted channel identification from the additional device (2) to the device (1), another independent transmission channel of the data communication link is used, which is different from the selected independent transmission channel.

3. The method according to claim 1 or 2, **characterized in that** when supplying the session key, a generation key is first supplied and the session key is generated by means of a generation function using the generation key.

4. The method according to claim 3, **characterized in that** when supplying the generation key, the generation key is supplied in the device (1) and the additional device (2) and the session key is derived independently in the device (1) and the additional device (2) in each case.

5. The method according to at least one of the preceding claims, **characterized in that** the generation key has a longer key length than the password.

6. The method according to at least one of the preceding claims, **characterized in that** the password is supplied in the device (1), such that the password is generated in the device (1) by means of a password generation function.

7. The method according to at least one of the preceding claims, **characterized in that** the password is issued via an output mechanism of the device (1).

8. The method according to at least one of the preceding claims, **characterized in that** the data communication link is in the form of a wireless data communication link.

9. The method according to at least one of the preceding claims, **characterized in that** use of the selected independent transmission channel ends after a usage time and another of the independent transmission channels between the device (1) and the additional device (2) is selected, which is then used subsequently for the further encrypted transmission of electronic data.

10. The method according to claim 9, **characterized in that** the other of the independent transmission channels is selected based on the encrypted electronic data which is transmitted via the selected independent transmission channel.

## Revendications

1. Procédé de transmission sécurisée de données électroniques par l'intermédiaire d'une liaison de communication de données, qui est formée entre un appareil (1) et un autre appareil (2) avec des canaux de transmission indépendants, dans lequel le procédé présente les étapes suivantes :
- fournir un mot de passe dans l'appareil (1),
- recevoir le mot de passe dans l'autre appareil (2) séparé de la liaison de communication de données,
- sélectionner un des canaux de transmission indépendants,
- fournir une clé de session dans l'appareil (1) et l'autre appareil (2) et
- transmettre des données électroniques cryptées entre l'appareil (1) et l'autre appareil (2) par l'intermédiaire du canal de transmission indépendant sélectionné en utilisant la clé de session pour crypter et décrypter les données électroniques,
**caractérisé en ce que**
- au moins un des appareils (1,2) est un appareil médical,
- le canal de transmission indépendant est sélectionné au moyen d'une fonction de sélection de canal dans l'autre appareil (2), dans lequel le canal de transmission sélectionné est coordonné à une identification de canal,
- l'identification de canal du canal de transmission indépendant sélectionné est cryptée en utilisant le mot de passe reçu dans l'autre appareil (2) et
- l'identification de canal cryptée est transmise par l'autre appareil (2) à l'appareil (1) par l'intermédiaire de la liaison de communication de données et est décryptée dans l'appareil (1).

2. Procédé selon la revendication 1, **caractérisé en ce que** lors de la transmission de l'identification de canal cryptée par l'autre appareil (2) à l'appareil (1), un autre canal de transmission indépendant est employé pour la liaison de communication de données, qui est différent du canal de transmission indépendant sélectionné.

3. Procédé selon les revendications 1 ou 2, **caractérisé en ce que** lors de la fourniture de la clé de session, une clé de génération est d'abord fournie et la clé de session est générée au moyen d'une fonction de génération en utilisant la clé de génération.

4. Procédé selon la revendication 3, **caractérisé en ce que** lors de la fourniture de la clé de génération, la clé de génération est fournie dans l'appareil (1) et l'autre appareil (2) et la clé de session est déduite indépendamment dans l'appareil (1) et l'autre appareil (2).

5. Procédé selon au moins une des revendications précédentes, **caractérisé en ce que** la clé de génération présente une plus grande longueur de clé que le mot de passe.

6. Procédé selon au moins une des revendications précédentes, **caractérisé en ce que** le mot de passe est fourni dans l'appareil (1), de telle sorte que le mot de passe dans l'appareil (1) soit généré au moyen d'une fonction de génération de mot de passe.

7. Procédé selon au moins une des revendications précédentes, **caractérisé en ce que** le mot de passe est émis par l'intermédiaire d'un dispositif d'émission de l'appareil (1).

8. Procédé selon au moins une des revendications précédentes, **caractérisé en ce que** la liaison de communication de données est formée comme une liaison de communication de données sans fil.

9. Procédé selon au moins une des revendications précédentes, **caractérisé en ce que** après un temps d'exploitation, l'utilisation du canal de transmission indépendant sélectionné prend fun et entre l'appareil (1) et l'autre appareil (2) un autre des canaux de transmission indépendants est sélectionné, qui est ensuite utilisé immédiatement après pour l'autre transmission cryptée des données électroniques.

10. Procédé selon la revendication 9, **caractérisé en ce que** l'autre des canaux de transmission indépendants est sélectionné sur la base des données électroniques cryptées, qui sont transmises par l'intermédiaire du canal de transmission indépendant sélectionné.
